# EUROPÄISCHE PATENTANMELDUNG

(11) **EP 1 862 290 A2**
(43) Veröffentlichungstag der Anmeldung: **05.12.2007**
(21) Anmeldenummer: 07010575.4
(22) Anmeldetag: 29.05.2007
(51) Int. Cl.: B29C 44/12, B29C 44/34

(54) **Hinterschäumverfahren**

(30) Priorität: 02.06.2006 DE 102006026290
(71) Anmelder: Intier Automotive Eybl Interiors GmbH, 94315 Straubing (DE)
(72) Erfinder: Wolf, Ludwig, 94369 Rain (DE)

(57) **Zusammenfassung**

Für das Hinterschäumen von Kunststoffhäuten oder anderen Dekormaterialien wird üblicherweise eine aufhebbare Abdichtung zwischen den zu verbindenden Teilen vorgesehen, um die Luft aus dem sich mit Schaum füllenden Spalt entweichen zu lassen. Die Prozessführung wird dadurch jedoch unsicher. Vor diesem Hintergrund wird ein Verfahren zum Verbinden eines flachen Dekorstücks (3) und insbesondere eines Hautteils mit der Oberfläche eines Trägers (2) oder einer ähnlichen stützenden Struktur durch eine Schicht eines Kunststoffschaums vorgeschlagen, bei dem zunächst eine Anzahl sich entlang von vorgesehenen randständigen Dichtlinien (A) erstreckender Verdickungen oder Verwerfungen, insbesondere Sicken (5) in dem Dekorstück (3) ausgebildet wird. Anschließend werden das Dekorstück (3) und der Träger (2) zwischen zwei Teilen eines Haltewerkzeugs (1, 4) aufgenommen, wobei zwischen Dekorstück (3) und Träger (2) ein der vorgesehenen Schaumdicke entsprechender Spalt (7) verbleibt. In den Spalt (7) wird ein flüssiger, Schaum bildender Kunststoff innerhalb eines durch die vorgesehenen Dichtlinien (A) begrenzten Bereichs eingebracht. Der durch die ausgehärtete Schaumschicht in dem Spalt (7) gebildete Verbund aus Dekorstück (3) und Träger (2) kann anschließend aus dem Haltewerkzeug (1, 4) entnommen werden. In einem alternativen oder ausgestaltenden Verfahren werden längliche, quer zu den vorgesehenen Dichtlinien (A) verlaufende Entlüftungsrillen oder -nuten (6) in der dem Spalt (7) zugewandten Oberfläche des Trägers (2) angelegt. Das Dekorstück (3) und der Trägers (2) werden wiederum zwischen zwei Teilen eines Haltewerkzeugs (1, 4) aufgenommen, wobei zwischen Dekorstück (3) und Träger (2) ein der vorgesehenen Schaumdicke entsprechender Spalt (7) verbleibt. Dorthinein wird ein flüssiger, Schaum bildender Kunststoffs innerhalb eines durch die vorgesehenen Dichtlinien (A) begrenzten Bereichs eingebracht. Der durch die ausgehärtete Schaumschicht in dem Spalt (7) gebildeten Verbunds aus Dekorstück (3) und Träger (2) kann nachfolgend aus dem Haltewerkzeug (1, 4) entnommen werden.

## Beschreibung

Die vorliegende Erfindung betrifft ein Hinterschäumverfahren und insbesondere ein Hinterschäumverfahren zur Herstellung von Instrumententafeln und anderen Fahrzeuginnenausstattungsteilen.

Hinterschäumverfahren finden Anwendung, um ein vorgefertigtes Hautteil, beispielsweise eine konturierte Kunststoffhaut, mittels eines Schaums auf einem starren Träger oder einer ähnlichen starren Trag- oder Stützstruktur fest anzuordnen. Insbesondere werden Hinterschäumverfahren angewendet zur Herstellung von Instrumententafeln aus einem Haut-Schaum-Träger-Verbund. Um hierbei eine druckweiche Haptik der Hautoberfläche auf der Instrumententafel zu erhalten, beträgt die Dicke der Schaumschicht einige Millimeter. Beim Hinterschäumen werden das Hautteil und der starre Träger in bekannter Weise in einem geeigneten Haltewerkzeug aufgenommen. In der Regel liegt dabei das becherförmig vertiefte Hautteil unterhalb des Trägers. In die Vertiefung des Hautteils wird anschließend ein flüssiger, Schaum bildender und aushärtender Kunststoff wie beispielsweise ein reaktives Polyurethan eingefüllt. Beim Hinterschäumen wird der Träger mit dem geforderten Spaltmaß über dem Hautteil fest gegen den Schaumdruck gehalten. Der durch die chemische Reaktion aufschäumende Kunststoff breitet sich in dem Spalt zwischen Hautteil und Träger aus und härtet im weiteren Verlauf aus. Wegen der komplizierten Geometrie des Spalts zwischen Hautteil und Träger kann nicht gewährleistet werden, dass der Schaum nach allen Richtungen gleichmäßig bis zum Rand des Hautteils aufsteigt. Daher werden bei gebräuchlichen Hinterschäumverfahren Dichtungen vorgesehen, die das ungewollte Austreten des aufschäumenden Kunststoffs am Rand verhindern. Allerdings dürfen diese gebräuchlichen Dichtungen erst wirksam werden, wenn der aufsteigende Schaum die Luft aus dem Spalt zwischen Hautteil und Träger praktisch vollständig verdrängt hat. Andernfalls bilden sich unerwünschte Lufteinschlüsse in der geschäumten Schicht zwischen Hautteil und Träger.

Eine bekannte Maßnahme zur steuerbaren Abdichtung des Rands zeigt die Veröffentlichung DE 199 16 789 C1. Darin wird eine schlauchförmige Dichtung vorgeschlagen, die durch die Beaufschlagung mit einem unter Druck stehenden Fluid, insbesondere durch Druckluft oder Flüssigkeitsdruck, betätigbar ist. Auf diese Art kann zum Entlüften des Spalts beim Aufsteigen des Schaums die Dichtung zunächst drucklos bleiben. Die Betätigung der Dichtung erfolgt, sobald der Schaum den Spaltrand erreicht. Auf diese Art kann ein Austreten des Schaums aus dem Spalt in vielen Fällen vermieden werden.

Allerdings ist die richtige Funktion der bekannten Abdichtmaßnahme von der Steiggeschwindigkeit des Schaums abhängig. Diese wiederum hängt für das überwiegend verwendete reaktive Polyurethan vor allem von dem äußeren Luftdruck und der chemischen Reaktionsgeschwindigkeit ab. Da die Steiggeschwindigkeit in der Praxis nicht gut automatisch erfassbar ist, muss die Steuerung der Dichtung entweder manuell aufgrund der von dem Bediener beobachteten Schaumbildung oder nach einer fest vorgegebenen Zeit erfolgen. Beides bringt Nachteile mit sich. Im ersten Fall ist der Prozess von dem Geschick des Bedieners abhängig. Im anderen Fall müssen welche die Steiggeschwindigkeit des Schaums bestimmenden Umgebungsbedingungen dauernd sehr genau eingehalten werden. Jede Abweichung von der vorgesehenen Steiggeschwindigkeit resultiert in einem Prozessfehler.

Die vorliegende Erfindung stellt sich vor diesem Hintergrund die Aufgabe, eine Abdichtmaßnahme anzugeben, die einen einfachen und robusten Fertigungsprozess ermöglicht.

Diese Aufgabe löst die vorliegende Erfindung unter einem ersten Aspekt durch ein Verfahren gemäß Anspruch 1. Unter einem anderen Aspekt löst die vorliegende Erfindung die gestellte Aufgabe durch ein Verfahren nach Anspruch 7. Besonders vorteilhaft ist dabei die Kombination der vorgeschlagenen Verfahren.

Weitere vorteilhafte Ausgestaltungen und Weiterbildungen der erfindungsgemäßen Verfahren ergeben sich aus den jeweiligen Unteransprüchen.

Eine bevorzugte Durchführungsform der erfindungsgemäßen Verfahren wird nachfolgend beispielshalber beschrieben, wobei veranschaulichend auf die beigefügten Zeichnungen Bezug genommen wird. Darin zeigen:
- Fig. 1: einen Querschnitt durch ein zweiteiliges Haltewerkzeug, in dem ein Hautteil und ein Träger zur Durchführung eines erfindungsgemäßen Hinterschäumverfahrens aufgenommen sind;
- Fig. 2: eine vergrößerte Ansicht zu dem Detail "X" in Fig. 1;
- Fig. 2b: eine vergrößerte Ansicht zu dem Detail "X" in Fig. 1 in einer weiteren Ausführungsform; und
- Fig. 3: eine Aufsicht auf den mit Entlüftungsrillen versehenen Randbereich des in Fig. 1 dargestellten Trägers.

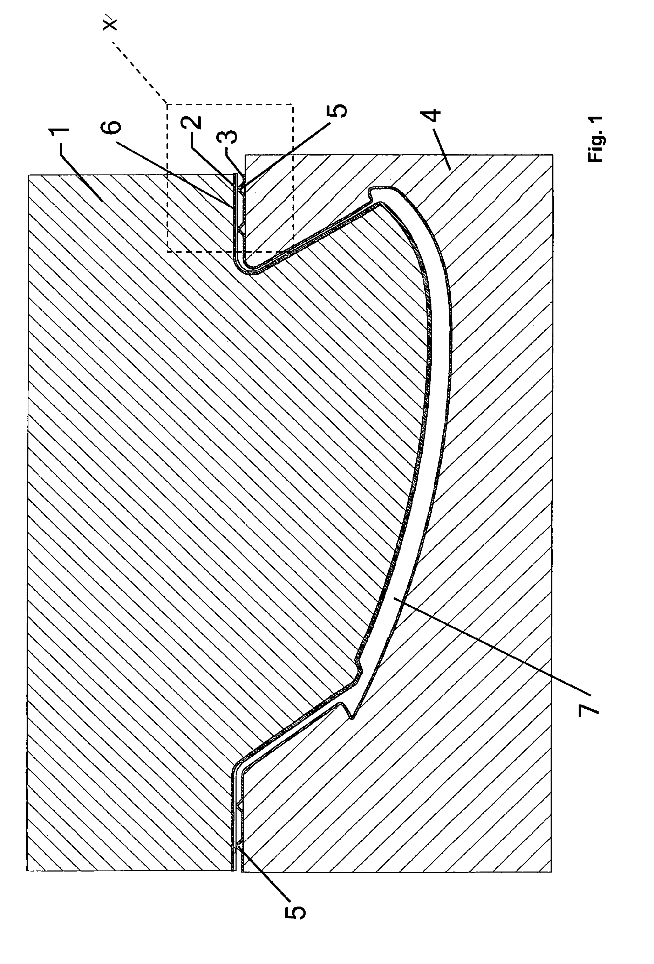

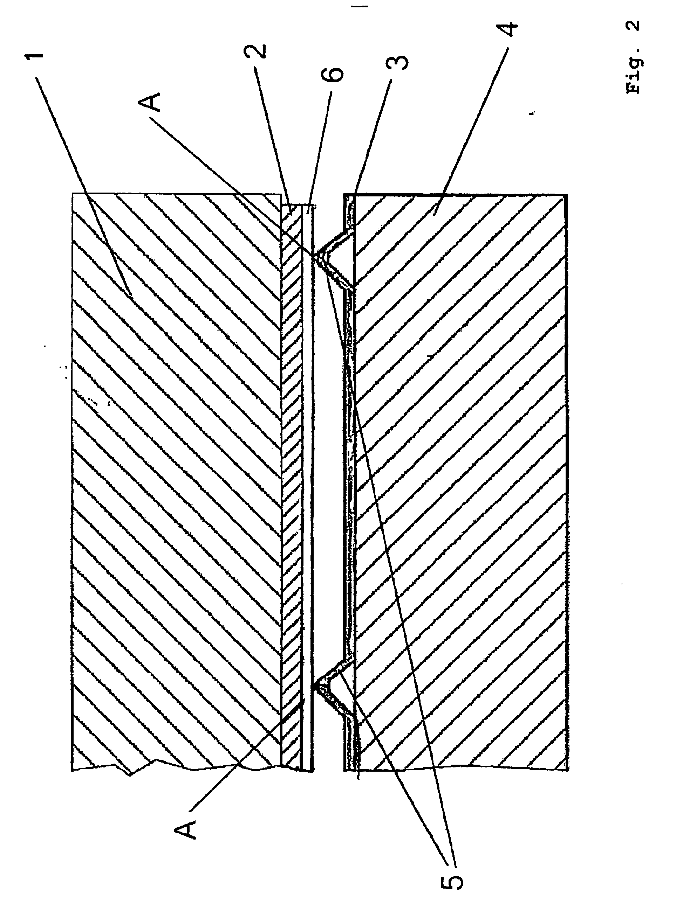

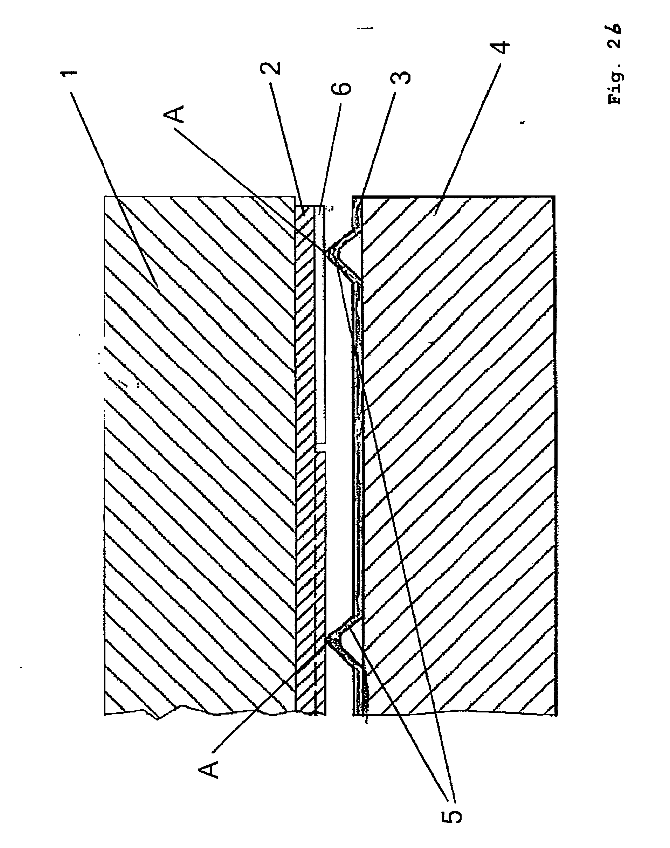

Gemäß den Fig. 1 und 2 wird ein Hautteil 3 durch eine Matrize 4 eines zweitteiligen Haltewerkzeugs 1, 4 gehalten. Oberhalb des Hautteils 3 ist auf einem Stempel 1 des Werkzeugs 1, 4 ein dünnwandiger Träger 2 angeordnet. In dem zwischen dem Hautteil 3 und dem dünnwandigen Träger 2 verbleibenden Spalt 7 wird sich bei der Durchführung des Verfahrens ein Schaum bildender Kunststoff ausbreiten. Die zunächst flüssige Kunststoffmasse wird dabei im linken, abgeschnittenen Bereich des Spalts 7 eingebracht. Während der Ausdehnung wird der sich bildende Schaum den Spalt 7 zunehmend ausfüllen und sich dabei von links in den dargestellten Ausschnitt hinein bewegen.

In der bevorzugten Durchführungsform des Verfahrens ist zur besseren Abdichtung des Randbereichs des Spalts 7 zwischen Hautteil 3 und Träger 2 vorgesehen, dort das Hautteil 3 mit einer Anzahl vorzugsweise vollständig umlaufender Sicken 5 zu versehen. Vorzugsweise sind die Sicken 5 so ausgebildet, dass die zur ausreichenden Abdichtung erforderliche Anpresskraft durch die Struktur des Hautteils 3 selbst aufgebracht wird. Dazu können die Sicken 5 wie in den Fig. 1 und 2 dargestellt einen dachförmigen Querschnitt aufweisen. Als gleichermaßen geeignet haben sich Sicken mit einem annähernd quadratischen umschlossenen Querschnitt erwiesen.

Im Fall eines zu weichen oder zu dünnen Hautteils 3 können auch in die Sicken 5 von unten eingreifende Stützstege vorgesehen sein. Solche an der Matrize 4 angeordneten Stützstege können insbesondere als feststehende elastische nachgiebige Stege oder als in an sich bekannter Weise druckbeaufschlagbare Schläuche ausgebildet sein. Alternativ können die Sicken auch als massive, mit dem Hautteil 3 zusammenhängende vorzugsweise umlaufende Stege ausgebildet sein. Diese unter den geschilderten Umständen sinnvollen Ergänzungen und Abwandlungen bei der Durchführung des erfindungsgemäßen Verfahrens sind in den Zeichnung jedoch nicht dargestellt.

Im Bereich der Sicken 5 weist die Oberfläche des Trägers 2 gemäß Fig. 2 eine Anzahl von Entlüftungsrillen 6 auf. Die Entlüftungsrillen 6 verlaufen vorzugsweise nahezu senkrecht über die abdichtenden Anpresslinien "A" der Sicken 5 hinweg. In diesem Bereich sind die Breite und die Tiefe der Entlüftungsrillen 6 so bemessen, dass die Sicken 5 gerade nicht in die Entlüftungsrillen 6 hinein gepresst werden.

In Fig.2b ist eine weitere Ausführungsform in Detailansicht dargestellt. Hierbei sind in einem Bereich zwischen den Anpresslinien "A" die Entlüftungsrillen 6 zweckmäßig untereinander gitterartig verbunden. Die Entlüftungsrillen 6 verlaufen bei dieser Ausgestaltung vom innenliegenden Randbereich zunächst nahezu senkrecht über die erste abdichtende Anpresslinie "A" ,verlaufen dann in einem mittleren Bereich zwischen den Anpresslinien "A" parallel zum Randbereich und anschließend nahezu senkrecht über die zweite abdichtende Anpresslinie "A". Hierdurch werden die Entlüftungsrillen 6 deutlich verlängert, so dass selbst bei einem schmalen Randbereich ein Austreten des Schaums verhindert werden kann.

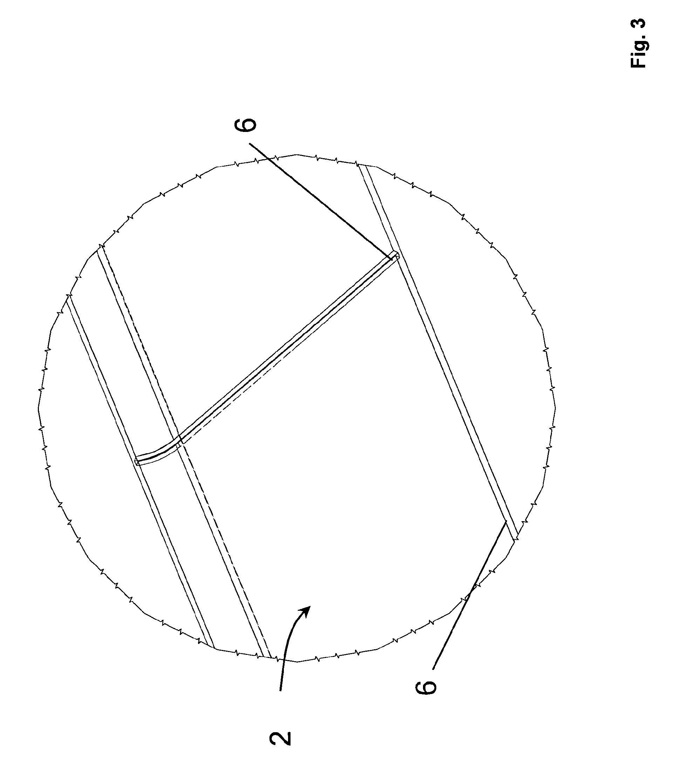

Die Verbindungen können wie in den Fig. 3 dargestellt ist, in der Art eines verbindenden und eventuell auch vollständig umlaufenden Ringkanals erfolgen. Beim Auffüllen des Spalts 7 durch den sich ausdehnenden Schaum erlauben die Entlüftungsrillen 6 das Entweichen der Luft aus dem Spalt 7 innerhalb der Abdichtung ohne ein aufwändig zu steuerndes Aufheben der Abdichtung. In eine Entlüftungsrille 6 an der Stelle einer Anpresslinie "A" eintretender Schaum wird den Durchlass aufgrund seiner hohen und zunehmenden Viskosität nahezu vollständig verschließen. Der Austritt von Schaum aus dem Spalt 7 ist daher auf unerhebliche Mengen beschränkt.

Die vorstehend beschriebenen Verfahren können einzeln oder in Kombination angewendet werden und eignen sich selbstverständlich auch zum Hinterschäumen von anderen flachen Dekorstücken, wie beispielsweise tiefgezogenen Dekorfolien und Lackfolien. Insbesondere bei kleineren Teilen und einfachen Randformen kann auf die beschriebenen Sicken oder anderweitig besonders ausgestalteten Randbereiche des Hautteils häufig verzichtet werden. In vielen Fällen reicht die Anpresskraft des Stempels aus, die zu verschäumenden Teile entlang der Dichtlinie ausreichend genau abdichtend gegeneinander zu pressen. Ferner können die vorgeschlagenen Verfahren auch Anwendung finden, um den Schaumzutritt zu einen inneren Teilbereich des Spalts zwischen Hautteil und Träger zu verhindern. Insofern ist der verwendete Begriff einer randständigen Dichtlinie nicht auf eine Dichtlinie am äußeren Rand von Hautteil und Träger beschränkt sondern erfasst auch Dichtlinien zu inneren, vom Schaumzutritt ausgeschlossenen Bereichen des Spalts zwischen Hautteil und Träger.

## Patentansprüche

1. Hinterschäumverfahren zum Verbinden eines flächenhaften oder flachen Dekorstücks (3) und insbesondere eines Hautteils mit der Oberfläche eines Trägers (2) oder einer ähnlichen stützenden Struktur durch eine Schicht eines Kunststoffschaums, umfassend Schritte zum
a. Ausbilden einer Anzahl sich entlang von vorgesehenen randständigen Dichtlinien (A) erstreckender Verdickungen oder Verwerfungen, insbesondere Sicken (5) in dem Dekorstück (3);
b. Aufnehmen des Dekorstücks (3) und des Trägers (2) zwischen zwei Teilen eines Haltewerkzeugs (1, 4), wobei zwischen Dekorstück (3) und Träger (2) ein der vorgesehenen Schaumdicke entsprechender Spalt (7) verbleibt;
c. Einbringen eines flüssigen, Schaum bildenden Kunststoffs in einen durch die vorgesehenen Dichtlinien (A) begrenzten Bereich des Spalts (7); und
d. Entnehmen des durch die ausgehärtete Schaumschicht in dem Spalt (7) gebildeten Verbunds aus Dekorstück (3) und Träger (2) aus dem Haltewerkzeug (1, 4).

2. Hinterschäumverfahren nach Anspruch 1, wobei das Dekorstück (3) ein Hautteil ist aus einem flexiblen Kunststoffmaterial, insbesondere aus Polyurethan oder Weich-PVC.

3. Hinterschäumverfahren nach Anspruch 1 oder 2, worin die Verdickungen, Verwerfungen und insbesondere die Sicken (5) im Wesentlichen über den gesamten Rand des Dekorstücks (3) hinweg angelegt werden.

4. Hinterschäumverfahren nach einem der Ansprüche 1 bis 3, worin genau eine, zwei oder drei im wesentlichen gleichmäßig beabstandet verlaufende linienförmige Verdickungen, Verwerfungen und insbesondere Sicken (5) ausgebildet werden.

5. Hinterschäumverfahren nach einem der Ansprüche 1 bis 4, wobei die Sicken (5) einen im wesentlichen quadratischen, dreieckigen oder halbrunden Querschnitt umschließen.

6. Hinterschäumverfahren nach Anspruch 5, wobei der Quadratische Querschnitt innerhalb der Sicken (5) eine Kantenlänge von 2-5 mm und vorzugsweise von 3-4 mm aufweist.

7. Hinterschäumverfahren zum Verbinden eines flächenhaften oder flachen Dekorstücks (3) und insbesondere eines Hautteils mit der Oberfläche eines Trägers (2) oder einer stützenden Struktur durch eine Schicht eines Kunststoffschaums, umfassend Schritte zum:
a. Anlegen länglicher, vorzugsweise annähernd quer über vorgesehene Dichtlinien (A) hinweg verlaufender Entlüftungsrillen oder -nuten (6) in der dem Spalt (7) zugewandten Oberfläche des Trägers (2);
b. Aufnehmen des Dekorstücks (3) und des Trägers (2) zwischen zwei Teilen eines Haltewerkzeugs (1, 4), wobei zwischen Dekorstück (3) und Träger (2) ein der vorgesehenen Schaumdicke entsprechender Spalt (7) verbleibt;
c. Einbringen eines flüssigen, Schaum bildenden Kunststoffs in einen durch Dichtlinien (A) begrenzten Bereich des Spalts (7); und
d. Entnehmen des durch die ausgehärtete Schaumschicht in dem Spalt (7) gebildeten Verbunds aus Dekorstück (3) und Träger (2) aus dem Haltewerkzeug (1, 4).

8. Hinterschäumverfahren nach Anspruch 7, wobei die Entlüftungsrillen einen Querschnitt von ungefähr 0,5 - 2 mm² und/oder eine Breite/Tiefe von ungefähr 0,5 - 1,5 mm, vorzugsweise von 1 mm aufweisen.

9. Hinterschäumverfahren nach einem der Ansprüche 1 bis 6 und einem der Ansprüche 7 oder 8.
